# EUROPÄISCHE PATENTANMELDUNG

(11) **EP 1 655 628 A1**
(43) Veröffentlichungstag der Anmeldung: **10.05.2006**
(21) Anmeldenummer: 04090412.0
(22) Anmeldetag: 27.10.2004
(51) Int. Cl.: G02B 6/42

(54) **Verfahren zur optischen Kopplung eines Lichtwellenleiters mit einer optischen Einheit eines optischen Moduls, optisches Modul, Koppelement für ein optisches Modul und Bausatz mit einer Mehrzahl von Koppelelementen**

(71) Anmelder: Infineon Technologies Fiber Optics GmbH, 13629 Berlin (DE)
(72) Erfinder: Weigert, Martin, 93152 Hardt (DE)
(74) Vertreter: Müller, Wolfram Hubertus

(57) **Zusammenfassung**

Bezeichnung der Erfindung: Verfahren zur optischen Kopplung eines Lichtwellenleiters mit einer optischen Einheit eines optischen Moduls, optisches Modul, Koppelelement für ein optisches Modul und Bausatz mit einer Mehrzahl von Koppelelementen.

Die Erfindung betrifft ein Verfahren zur optischen Kopplung eines Lichtwellenleiters mit einer optischen Einheit (1), die in oder an einem optischen Modul angeordnet ist. Das optische Modul weist eine Referenzgeometrie (2) auf, die eine erste Symmetrieachse (20) definiert. Erfindungsgemäß wird ein Versatz zwischen der (ersten) optischen Achse (10) der optischen Einheit (1) und der Symmetrieachse (20) der Referenzgeometrie (2) festgestellt. Es wird dann ein als optischer Exzenter ausgebildetes Koppelelement (4) bereitgestellt, das den Versatz beseitigt. Das Koppelelement (4) weist an zwei gegenüberliegenden Seiten (42, 43) jeweils einen Ein-/Auskoppelbereich auf, die versetzte (zweite und dritte) optischen Achsen (420, 430) besitzen. Entlang der zweiten optischen Achse (420) eingekoppeltes Licht erfährt im Koppelelement eine Lichtführung derart, dass es entlang der dritten optischen Achse ausgekoppelt wird, und umgekehrt. Bei dem fertig montierten Modul fällt die Mittelachse (410) des Koppelelements (4) mit der Symmetrieachse (20) des optischen Moduls zusammen. Weiter fallen die erste optische Achse (10) der optischen Einheit (1) und die zweite optische Achse (420) des Koppelelements (4) zusammen. Die Erfindung betrifft des weiteren ein entsprechendes optisches Modul, ein Koppelelement und einen Bausatz mit Koppelelementen.

## Beschreibung

Bezeichnung der Erfindung: Verfahren zur optischen Kopplung eines Lichtwellenleiters mit einer optischen Einheit eines optischen Moduls, optisches Modul, Koppelelement für ein optisches Modul und Bausatz mit einer Mehrzahl von Koppelelementen.

Die Erfindung betrifft ein Verfahren zur optischen Kopplung eines Lichtwellenleiters mit einer optischen Einheit eines optischen Moduls gemäß dem Oberbegriff des Anspruchs 1, ein optisches Modul gemäß dem Oberbegriff des Anspruchs 7, ein Koppelelement für ein solches optisches Modul und einen Bausatz mit einer Mehrzahl von Koppelelementen.

Es stellt sich allgemein das Problem, eine optische Einheit wie einen vertikal emittierenden Laser oder eine Fotodiode mit einem Lichtwellenleiter in effektiver Weise zu koppeln. Hierzu ist es bekannt, eine aktive Justage des Lichtwellenleiters in Bezug auf die optische Einheit durchzuführen. Dabei wird der Lichtwellenleiter während des Betriebs der optischen Einheit auf eine maximale ein- oder ausgekoppelte Leistung ausgerichtet und in dieser Position fixiert. Dieser aktive Justagevorgang ist jedoch sehr zeit- und kostenintensiv und dementsprechend für einen Hochvolumeneinsatz nicht geeignet.

Aus der DE 199 09 242 A1 ist ein opto-elektronisches Modul bekannt, bei dem ein Leadframe mit einem opto-elektronischen Wandler in einem Modulgehäuse positioniert und mit einem lichtdurchlässigen, formbaren Material vergossen wird. Eine Lichtein- oder Auskopplung erfolgt über eine Lichtleitfaser, die an einem Stutzen des Modulgehäuses angekoppelt wird. Auf dem Leadframe befindet sich auch der Treiberbaustein bzw. Empfangsbaustein für den opto-elektronischen Wandler.

Die US-B2-6 470 120 beschreibt ein Verfahren und eine Vorrichtung, bei denen sowohl eine optische Komponente als auch ein zugeordneter Lichtwellenleiter jeweils auf einer inneren Hülse angeordnet sind, die in Bezug auf eine in einem äußeren Rahmen fest angeordneten äußere Hülse exzentrisch ausgebildet ist. Die innere Hülse ist dabei jeweils drehbar in einer entsprechenden Bohrung der äußeren Hülse angeordnet. Weiter sind die optische Komponente und der Lichtwellenleiter jeweils exzentrisch in der inneren Hülse angeordnet. Durch Drehen der äußeren und/oder inneren Hülse ist jeweils die Position der optischen Komponente und des Lichtwellenleiters einstellbar und diese können durch geeignetes Drehen der jeweiligen inneren und äußeren Hülsen zueinander positioniert werden.

Aus der DE-A-23 58 785 ist eine justierbare Kopplungsvorrichtung für optische Bauelemente bekannt, bei der eine Lichtleitfaser in einer exzentrischen Bohrung eines Steckerteils angeordnet ist, das in einer ebenfalls exzentrischen Bohrung eines Steckerexzenters angeordnet ist, wobei der Steckerexzenter zentrisch an einer Exzenterführung gelagert ist. Durch eine Überlagerung der Drehbewegungen des Steckerteils und des Steckerexzenters kann die Eintrittsfläche der Lichtleitfaser auf die Position eines optischen Elementes ausgerichtet werden, das optisch mit der Lichtleitfaser zu koppeln ist.

Als nachteilig kann sich bei der Anordnung der DE-A-23 58 785 die exzentrische Anordnung der Lichtleitfaser in Bezug auf die Kopplungsvorrichtung erweisen. So kann eine exzentrische Anordnung der Lichtleitfaser im gesamten Stecksystem zu Toleranzproblemen führen. Insbesondere für den Fall, dass die Geometrie eines optischen Steckers, der die anzukoppelnde Lichtleitfaser enthält, sich nicht flexibel anpassen lässt, kann eine exzentrische Lage der Lichtleitfaser zu Design- und Toleranzproblemen führen.

Der vorliegenden Erfindung liegt dementsprechend die Aufgabe zugrunde, ein Verfahren zur optischen Kopplung eines Lichtwellenleiters mit einer optischen Einheit eines optischen Moduls, ein entsprechendes optisches Modul, ein Koppelelement für ein solches optisches Modul sowie einen Bausatz mit einer Mehrzahl von solchen Koppelelementen zur Verfügung zu stellen, die zum einen ohne die Notwendigkeit einer aktiven Justage und zum anderen ohne die Notwendigkeit einer exzentrischen Anordnung eines Lichtwellenleiters an dem Modul in einfacher und kostengünstiger Weise die Ausrichtung eines Lichtwellenleiters in Bezug auf eine lichtemittierende oder eine lichtdetektierende optische Einheit ermöglichen.

Diese Aufgabe wird erfindungsgemäß durch ein Verfahren mit den Merkmalen des Anspruchs 1, ein optisches Modul mit den Merkmalen des Anspruchs 7, ein Koppelelement mit den Merkmalen des Anspruchs 18 sowie einen Bausatz mit den Merkmalen des Anspruchs 21 gelöst. Bevorzugte und vorteilhafte Ausgestaltungen der Erfindung sind in den Unteransprüchen angegeben.

Danach weist das optische Modul eine Referenzgeometrie auf, die genau eine Symmetrieachse des optischen Moduls definiert. Zunächst werden Betrag und Richtung eines Versatzes zwischen der (ersten) optischen Achse der optischen Einheit und der Symmetrieachse der Referenzgeometrie bestimmt. Es wird weiter ein Koppelelement bereitgestellt, das eine erste, der optischen Einheit zugewandte Seite und eine zweite, mit einem Lichtwellenleiter zu koppelnde Seite aufweist.

Das erfindungsgemäße Koppelelement weist eine Mittelachse auf. Die erste Seite des Koppelelementes weist einen LichtEin-/Auskoppelbereich mit einer (zweiten) optische Achse auf. Die zweite Seite des Koppelelements weist einen Licht-Ein-/Auskoppelbereich mit einer (dritten) optischen Achse auf, die parallel zur zweiten optischen Achse verläuft und die mit der Mittelachse zusammenfällt. Das Koppelelement ist dabei derart ausgebildet, dass entlang der zweiten optischen Achse eingekoppeltes Licht im Koppelelement eine Lichtführung derart erfährt, dass es entlang der dritten optischen Achse ausgekoppelt wird, und umgekehrt (d.h. entlang der dritten optischen Achse eingekoppeltes Licht wird entlang der zweiten optischen Achse ausgekoppelt). Es wird durch das Koppelelement somit ein optischer Exzenter bereitgestellt, in dem das Licht von einer ersten Achse an der einen Seite zu einer zweiten Achse an der anderen Seite verläuft.

Es wird dabei erfindungsgemäß ein solches Koppelelement aus einer Mehrzahl von Koppelelementen ausgewählt, bei dem der Betrag des Versatzes zwischen der zweiten und der dritten optischen Achse im Wesentlichen gleich dem Betrag des Versatzes zwischen der ersten optischen Achse der optischen Einheit und der Symmetrieachse der Referenzgeometrie ist. Ein solches Koppelelement wird passiv, d.h. ohne eine aktive Justage, in Bezug auf das optische Modul derart angeordnet, dass die Mittelachse des Koppelelementes mit der Symmetrieachse des optischen Moduls zusammenfällt, so dass auch die optische Achse eines angekoppelten Lichtwellenleiters mit der Symmetrieachse des optischen Moduls zusammenfällt, d.h. zentrisch in Bezug auf das optische Modul angeordnet ist.

Das Koppelelement wird in Bezug auf das optische Modul um seine Mittelachse gedreht, bis die erste optische Achse der optischen Einheit und die zweite optische Achse des Koppelelementes zusammenfallen, d.h. bis die Richtung des Versatzes zwischen der zweiten optischen Achse und der dritten optischen Achse gleich der Richtung des Versatzes zwischen der ersten optischen Achse der optischen Einheit und der ersten Symmetrieachse der Referenzgeometrie ist. Der Versatz zwischen den beiden optischen Achsen des Koppelelementes bildet dann hinsichtlich Betrag und Richtung exakt den Versatz zwischen der optischen Achse der optischen Einheit und der Symmetrieachse der Referenzgeometrie nach.

Das Koppelelement stellt dabei an seiner ersten, der optischen Einheit zugewandten Seite einen versetzten Einkoppelbereich bereit. Die einer Lichtleitfaser bzw. einem optischen Stecker zugewandte zweite Seite des Koppelelementes koppelt Licht dagegen entlang der Mittelachse ein bzw. aus, so dass ein angekoppelter Stecker zentrisch in Bezug auf das optische Modul angeordnet ist. Bei einem Drehen des Koppelelementes in Bezug auf das optische Modul zur Bereitstellung einer Übereinstimmung der ersten optischen Achse der optischen Einheit und der zweiten optischen Achse des Koppelelementes dreht sich die der Lichtleitfaser bzw. dem optischen Stecker zugewandte zweite Seite des Koppelelementes lediglich um die eigene Mittelachse.

Die erfindungsgemäße Lösung beruht somit auf dem Gedanken, den Versatz zwischen der idealen Position einer optischen Einheit und der tatsächlichen Position zu bestimmen und zur Kompensation dieses Versatzes ein Koppelelement einzusetzen, das diesen Versatz kompensiert. Das Koppelelement realisiert dabei einen optischen Exzenter, der an seinen beiden Enden zwei zueinander versetzte optische Achsen bzw. zwei zueinander versetzte Lichteinkoppel- und Auskoppelflächen aufweist. Es wird dabei ein Koppelelement ausgewählt und derart angeordnet, dass die versetzte optische Achse des Koppelelements in Übereinstimmung mit der optischen Achse der lichtemittierenden oder lichtempfangenden optischen Einheit gebracht wird. Durch die Lichtführung im Koppelelement wird das entlang der einen Achse eingekoppelte Licht entlang der anderen Achse ausgekoppelt und umgekehrt. Die Lichtführung im Koppelelement beseitigt somit den Versatz zwischen der optischen Achse der (nicht ideal in Bezug auf die Referenzgeometrie ausgerichteten) optischen Einheit und der optischen Achse der anzukoppelnden Lichtleitfaser bzw. des anzukoppelnden Steckers. Auf diese Weise kann eine nicht ideale Position einer optischen Einheit in Bezug auf das optische Modul ohne die Notwendigkeit einer exzentrischen Anordnung einer anzukoppelnden Lichtleitfaser an dem optischen Modul erreicht werden.

In einer bevorzugten Ausgestaltung der Erfindung weist das Koppelelement einen internen Lichtwellenleiter auf, dessen eines Ende auf der zweiten optischen Achse liegt und dessen anderes Ende auf der dritten optischen Achse liegt, wobei der Lichtwellenleiter zwischen den beiden Enden einen gebogenen Verlauf besitzt. Durch den Lichtwellenleiter wird somit der Versatz zwischen den beiden optischen Achsen des Koppelelementes ausgeglichen. Der Lichtwellenleiter kann als gesondertes Teil realisiert sein, beispielsweise durch eine Glasfaser, aber auch durch das Koppelelement selbst ausgebildet werden. Im letzteren Fall ist das Koppelelement beispielsweise ein Kunststoffteil, in dem ein Bereich mit einem unterschiedlichen Brechungsindex den Lichtwellenleiter realisiert.

Die erfindungsgemäß vorgesehene Lichtführung im Koppelelement kann statt durch einen Lichtwellenleiter beispielsweise auch durch eine abbildende Optik realisiert werden. Beispielsweise weist die abbildende Optik mindestens zwei Linsen auf, wobei die eine Linse im Bereich der ersten Seite des Koppelelementes und die andere Linse im Bereich der zweiten Seite des Koppelelementes angeordnet ist. Die Linsen können dabei in einer ersten Ausgestaltung Teil des Koppelelementes sein. Beispielsweise sind sie durch entsprechende Formung der Außenflächen des Koppelelementes gebildet. Dabei kann es sich auch um Fresnel-Linsen handeln, die in dem Kunststoffmaterial des Koppelelementes ausgebildet sind. In einer zweiten Augestaltung sind die Linsen als gesonderte Elemente ausgebildet, jedoch mit dem Koppelelement verbunden. In einer dritten Variante ist vorgesehen, dass zumindest die der optischen Einheit zugewandte Linse in dem optischen Modul realisiert ist, beispielsweise in einer Kunststoffverkapselung des optischen Moduls.

Bei einer Realisierung in Kunststoff können die Linsen beispielsweise formgegossen oder gemouldet werden.

Die Außenkontur des Koppelelementes ist bevorzugt zylindrisch, kann jedoch auch andere Formen wie beispielsweise ein N-Eck annehmen. Bevorzugt wird dabei das Koppelelement mittels der Referenzgeometrie an dem optischen Modul befestigt. Im Falle einer zylindrischen Außenkontur des Koppelelementes wird dieses beispielsweise in einen Stutzen des optischen Moduls, der die Referenzgeometrie bereitstellt, eingesteckt.

Die Befestigung der Lichtleitfaser an dem optischen Modul kann grundsätzlich auf zwei Arten erfolgen. Zum einen kann vorgesehen sein, dass die Lichtleitfaser ebenfalls an der Referenzgeometrie befestigt wird. Für den Fall, dass die Referenzgeometrie durch einen zylindrischen Stutzen gebildet wird, wird beispielsweise zunächst das Koppelelement in den Stutzen eingeführt und anschließend die Lichtleitfaser, wobei die Stirnseite der Lichtleitfaser an der zweiten Seite des Koppelelementes zur Anlage kommt. Zum anderen kann vorgesehen sein, dass die Lichtleitfaser an dem Koppelelement befestigt wird. Hierzu weist das Koppelelement an der der optischen Einheit abgewandten Seite Aufnahmestrukturen zur Ankopplung eines Lichtwellenleiters oder eines optischen Steckers auf. Bei diesen Aufnahmestrukturen kann es sich beispielsweise um Raststrukturen handeln, die der Ankopplung eines optischen Steckers dienen. In beiden genannten Varianten liegt die optische Achse des anzukoppelnden Lichtwellenleiters auf der Mittelachse des Koppelelementes. Da die Mittelachse des Koppelelementes wiederum auf der Symmetrieachse der Referenzgeometrie liegt, liegt insgesamt auch die optische Achse des anzukoppelnden Lichtwellenleiters auf der Symmetrieachse der Referenzgeometrie, d.h. der anzukoppelnde Lichtwellenleiter ist zentrisch in Bezug auf das optische Modul ausgerichtet. Der Versatz der lichtemittierenden oder lichtdetektierenden optischen Einheit von seiner idealen Lage wird durch das Koppelelement (den optischen Exzenter) ausgeglichen.

Das Koppelelement ist bevorzugt einteilig ausgebildet, d.h. das Koppelelement und die in dem Koppelelement ausgebildeten Mittel, die eine Lichtführung in dem Koppelelement derart bewirken, dass das entlang der optischen Achse der einen Seite eingekoppelte Licht entlang der optischen Achse der anderen Seite ausgekoppelt wird, bilden ein Teil.

Zur Feststellung eines Versatzes zwischen der optischen Achse des optischen Elementes und der mechanischen Achse der Referenzgeometrie werden beispielsweise Bilderkennungsverfahren eingesetzt. Hierzu werden beispielsweise die Referenzgeometrie und die aktuelle Position der optischen Einheit mittels einer Kamera erfasst und wird mittels eines Mustererkennungsprogrammes der Versatz der optischen Einheit gegenüber der Referenzgeometrie bestimmt.

Die Referenzgeometrie dient bevorzugt nicht nur als Referenz für die Anordnung der optischen Einheit, sondern auch der mechanischen Ankopplung und Befestigung des Koppelelementes an der optischen Einheit. Eine solche Befestigung ist in einfacher Weise möglich, da die Symmetrieachse der Referenzgeometrie und die Mittenachse des Koppelelementes nach der Befestigung zusammenfallen.

Die Erfindung wird nachfolgend unter Bezugnahme der Figuren der Zeichnung anhand mehrerer Ausführungsbeispiele näher erläutert. Es zeigen:
- Figur 1: schematisch die ideale Anordnung einer optischen Einheit an einem optischen Modul, das eine Referenzgeometrie aufweist;
- Figur 2: schematisch die Anordnung einer optischen Einheit in einem optischen Modul, das eine Referenzgeometrie aufweist, in versetzter Position;
- Figur 3: eine Schnittansicht durch eine zylindrisch ausgebildete Referenzgeometrie entsprechend der Anordnung der Figur 2, wobei zusätzlich die optische Einheit dargestellt ist;
- Figur 4: ein erstes Ausführungsbeispiel eines einen optischen Exzenter bildenden Koppelelementes, das in einen zylindrischen Stutzen eingesetzt ist, wobei in das Koppelelement ein interner Lichtwellenleiter integriert ist;
- Figur 5: ein zweites Ausführungsbeispiel eines einen optischen Exzenter bildenden Koppelelementes, das in einen zylindrischen Stutzen eingesetzt ist, wobei das Koppelelement eine abbildenden Optik umfasst;
- Figur 6: ein Ausführungsbeispiel einer Anordnung mit einem Koppelelement gemäß der Figur 4, wobei der zylindrische Stutzen zusätzlich der Ankopplung eines Lichtwellenleiter-Steckers dient;
- Figur 7: eine Abwandlung der Anordnung gemäß der Figur 4, wobei das Koppelelement zusätzlich Aufnahmestrukturen zur Ankopplung eines optischen Steckers aufweist; und
- Figur 8: eine Abwandlung des Ausführungsbeispiels der Figur 4, wobei das Koppelelement zusätzlich Raststrukturen zur Aufnahme eines optischen Steckers ausbildet.

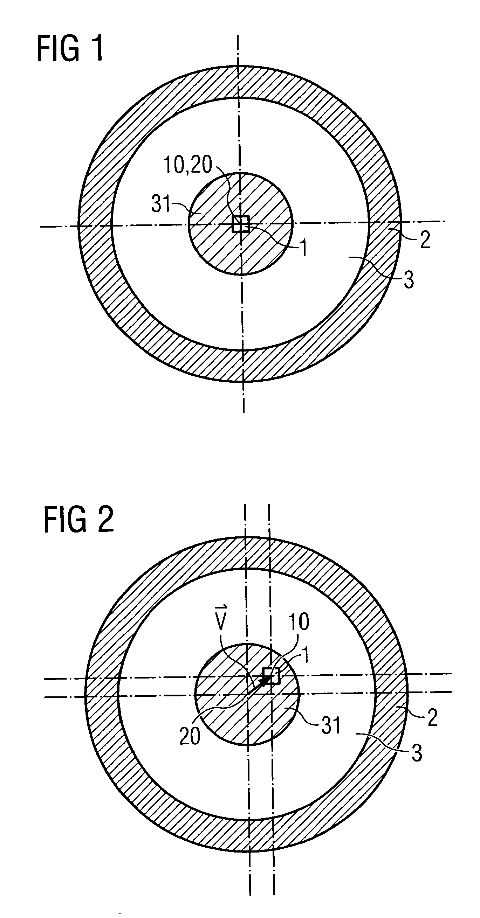

Anhand der Figuren 1 bis 3 wird zunächst die Ausgangsproblematik der vorliegenden Erfindung erläutert. Die Figur 1 zeigt in Draufsicht eine optische Einheit 1, die auf einer Referenzfläche 3 eines optischen Moduls (nicht näher dargestellt) angeordnet ist. Bei dem optischen Modul handelt es sich insbesondere um ein optoelektronisches Sendemodul und/oder ein optoelektronisches Empfangsmodul, beispielsweise einen optoelektronischen Transceiver. Die Referenzfläche 3 ist beispielsweise die Oberfläche eines Trägersubstrats, auf dem die optische Einheit 1 in an sich bekannter Weise mechanisch befestigt und elektrisch kontaktiert ist.

Die optische Einheit 1 kann grundsätzlich in beliebiger Weise ausgebildet sein. Bevorzugt handelt es sich um eine Leuchtdiode (LED), eine vertikal emittierende Laserdiode (VCSEL), eine Fotodiode, einen Spiegel oder eine andere optische Funktionsfläche, über die Licht empfangen oder ausgesandt wird. Die optische Einheit ist bevorzugt als vorgefertigter Chip ausgebildet, der auf der Referenzfläche 3 aufgesetzt wird. Sie wird im Folgenden daher auch als optischer Chip 1 bezeichnet. Die optische Einheit 1 weist eine optische Achse 10 auf, die am Schnittpunkt des in Figur 1 gestrichelt dargestellten Koordinatenkreuzes liegt. Entlang der optischen Achse 10 wird von dem optischen Chip 1 Licht ausgesandt bzw. Licht empfangen. Die optische Achse 10 verläuft senkrecht zur Zeichenebene der Figur 1.

Es ist an der optischen Einheit eine Referenzgeometrie 2 ausgebildet. Die Referenzgeometrie 2 besitzt eine symmetrische Form. Im dargestellten Ausführungsbeispiel ist die Referenzgeometrie 2 zylindrisch ausgebildet, so dass sie in der Schnittdarstellung und in der Vorderansicht kreisförmig ist. Es sei an dieser Stelle jedoch darauf hingewiesen, dass auch andere geometrische Formen möglich sind, beispielsweise eine N-eckige Form. Auch muss die Referenzgeometrie keine kontinuierliche geometrische Struktur aufweisen. Sie kann ebenso aus einzelnen Punkten oder Bereichen, beispielsweise aus drei oder vier Punkten bestehen, die miteinander nicht verbunden sind. Es ist aber von Bedeutung, dass die Referenzgeometrie eine innere Symmetrie aufweist, die eine erste Symmetrieachse 20 definiert.

In der Figur 1 fällt die Symmetrieachse 20 der Referenzstruktur 2 mit der optischen Achse 10 des optischen Chips 1 überein, da der optische Chip 1 genau in der Mitte der Referenzgeometrie angeordnet ist. Dies ist der Idealzustand, der praktisch jedoch nur selten zu erreichen ist. In der Regel wird der optische Chip 1 innerhalb eines Bereiches 31 der Referenzfläche 3 angeordnet sein. Dieser Bereich 31 gibt einen Versatzbereich an, in dem die optische Achse des Chips 1 nicht mit der geometrischen Achse der Referenzstruktur 2 übereinstimmt.

Die Figur 2 zeigt nun den in der Praxis realistischen Fall, dass der optische Chip 1 mit einem Versatz gegenüber der Referenzgeometrie 2 auf der Referenzfläche der optischen Einheit montiert ist. Dies bedeutet, dass die optische Achse 10 des optischen Chips 1 und die Symmetrieachse 20 der Referenzgeometrie 2 nicht mehr zusammenfallen, sondern vielmehr unter Vorliegen eines Versatzes parallel zueinander verlaufen. Der Versatz ist ein Vektor v mit einem bestimmten Betrag und einer bestimmten Richtung.

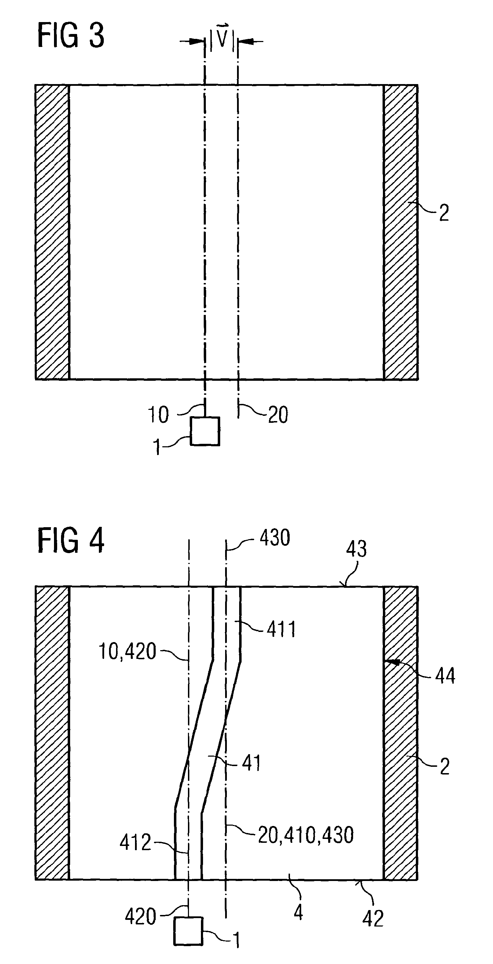

Die Figur 3 zeigt die Anordnung der Figur 2 in seitlicher Schnittansicht. Das optische Modul und Referenzfläche 31 sind dabei nicht dargestellt. Es sind die Referenzgeometrie 2 und die zugehörige Symmetrieachse 20 sowie die dazu um den Vektor v verschobene Einheit 1 und deren optische Achse 10 dargestellt.

Zum Ausgleich des Versatzes bei der Ankopplung eines Lichtwellenleiters ist nun eine speziell ausgebildete Koppelstruktur vorgesehen. Durch die Koppelstruktur wird der Versatz sowohl hinsichtlich Richtung als auch Betrag ausgeglichen.

Die Koppelstruktur umfasst ein Koppelelement 4, das in der Figur 4 in einem ersten Ausführungsbeispiel dargestellt ist. Das Koppelelement 4 weist eine erste, der optischen Einheit 1 zugewandte Seite 42 und eine zweite, einem anzukoppelnden optischen Stecker bzw. einer anzukoppelnden Lichtleitfaser zugewandte Seite 43 auf. Das Koppelelement 4 weist eine Mittelachse 410 auf, die die Symmetrieachse des Koppelelementes hinsichtlich seiner Außenkonturen darstellt. Im dargestellten Ausführungsbeispiel ist die Außenkontur 44 des Koppelelementes 4 zylindrisch, d.h. das Koppelelement 4 bildet einen Zylinder. Des weiteren wird die Referenzgeometrie 2 durch einen zylindrischen Stutzen gebildet. Das zylindrische Koppelelement 4 weist einen Außenmesser auf, der gerade dem Innendurchmesser des zylindrischen Stutzens 2 entspricht, so dass das Koppelelement 4 im Wesentlichen spielfrei in den Stutzen 2 einsetzbar ist.

Es wird darauf hingewiesen, dass die Mittelachse 410 alternativ auch durch eine Innenkontur des Koppelelementes 4 definiert sein kann, insbesondere wenn das Koppelelement mittels einer solchen Innenkontur mit der Referenzgeometrie des optischen Moduls verbunden wird.

Das Koppelelement 4 weist nun zwei zueinander versetzte Ein-/Auskoppelbereiche mit optischen Achsen 420, 430 auf. Der eine Ein-/Auskoppelbereich mit der optischen Achse 420 ist an der ersten Seite 42 des Koppelelementes ausgebildet, der andere Ein-/Auskoppelbereich mit der zweiten optischen Achse 430 ist an der zweiten Seite 43 des Koppelelementes realisiert. Der Versatz zwischen den beiden Achsen 420, 430 ist dabei so gewählt, dass er gerade dem Versatz zwischen der optischen Achse 10 des optischen Elementes und der optischen Achse 20 der Referenzgeometrie entspricht. Innerhalb des Koppelelementes 4 ist die Lichtführung derart, dass entlang der Achse 420 an der ersten Seite 42 angekoppeltes Licht entlang der Achse 430 an der zweiten Seite 43 des Koppelelementes ausgekoppelt wird, und das entlang der Achse 430 der zweiten Seite 43 eingekoppeltes Licht entlang der Achse 420 der ersten Seite 42 des Koppelelementes ausgekoppelt wird. Insofern bildet das Koppelelement einen "optischen Exzenter".

Zur Realisierung dieser Lichtführung in dem optischen Exzenter ist in dem Ausführungsbeispiel der Figur 4 ein Lichtwellenleiter 41 in dem optischen Exzenter ausgebildet. Das eine Ende 412 des Lichtwellenleiters 41, dessen Stirnfläche den einen Ein-/Auskoppelbereich bildet, liegt dabei auf der optischen Achse 420 und das andere Ende 411 des Lichtwellenleiters 41, dessen Stirnfläche den anderen Ein-/Auskoppelbereich bildet, liegt auf der optischen Achse 430. Dazwischen ist der Lichtwellenleiter 41 gebogen.

Zur Ausbildung des Lichtwellenleiters 41 in dem Koppelelement 4 bestehen mehrere Möglichkeiten. In einer ersten Ausführungsvariante ist der Lichtwellenleiter 41 als gesonderte Lichtleitfaser vorgesehen, die in eine entsprechende Bohrung des Koppelelementes 4 eingesetzt wird. Auch kann eine entsprechend gebogene Lichtleitfaser mit dem Material des optischen Exzenters umspritzt werden. In einer zweiten Ausgestaltung ist die Lichtleitfaser 41 einstückiger Bestandteil des Koppelelementes 4 und beispielsweise durch einen Bereich mit unterschiedlichem Brechungsindex realisiert.

Es wird darauf hingewiesen, dass aufgrund des Umstandes, dass die Mittenachse 410 des Koppelelementes 4 mit der optischen Achse 430 der zweiten Seite 43 des Koppelelementes übereinstimmt, diese aufeinander liegen. Da darüber hinaus das Koppelelement 4 in dem Stutzen 2 angeordnet ist, fallen auch die Symmetrieachse 20 des Stutzens 2 und die Achsen 410, 430 zusammen.

Es ist nun vorgesehen, ein Koppelelement 4 zu wählen, bei dem der Versatz zwischen den beiden optischen Achsen 420, 430 im Wesentlichen gleich dem Versatz zwischen der optischen Achse 10 optischen Chips 1 und der Symmetrieachse 20 der Referenzgeometrie ist, und zwar sowohl hinsichtlich Betrag als auch (nach entsprechendem Drehen des Koppelelementes) hinsichtlich der Richtung. Hierdurch wird erreicht, dass die optische Achse 420 an der dem optischen Element 1 zugewandten Seite 42 des Koppelelementes mit der optischen Achse 10 des optischen Chips 1 übereinstimmt. Auf diese Weise wird eine an die Seite 43 des Koppelelementes 4 angekoppelte Lichtleitfaser trotz des Versatzes des optischen Chips 1 gegenüber der Idealposition optisch ideal mit dem optischen Chip 1 gekoppelt, d.h. die ein- bzw. ausgekoppelte Leistung ist maximal. Dies wird dabei ohne das Erfordernis einer aktiven Justage erreicht.

Die Referenzgeometrie 2 und das Koppelelement 4 bilden dabei korrespondierende Führungsstrukturen aus.

Zur Ausrichtung einer optischen Faser in Bezug auf eine optische Einheit 1 werden folgende Verfahrensschritte durchlaufen.

Nachdem der optische Chip 1 auf der Referenzfläche 3 (vgl. Figur 1, 2) des optischen Moduls montiert ist, wird zunächst festgestellt, welchen Versatz v der optische Chip 1 bzw. die optische Achse 10 des optischen Chips 1 in Bezug auf die Symmetrieachse 20 der am optischen Modul vorgesehenen Referenzgeometrie 2 besitzt. Es wird also festgestellt, an welcher Stelle des Versatzfeldes 31 der optische Chip 1 tatsächliche platziert wurde. Eine solche Bestimmung erfolgt bevorzugt mittels eines Bilderkennungsverfahrens. Beispielsweise werden die Referenzgeometrie 2 und der optische Chip 1 mittels einer Kamera erfasst und ihre Position mittels eines Mustererkennungssystems ermittelt. Das Mustererkennungssystem bestimmt den Versatz (Abweichung der Ist-Lage von der Soll-Lage) des optischen Chips 1 gegenüber der Referenzgeometrie 2. Der Versatz ist ein Vektor mit einer bestimmten Länge und einer bestimmten Richtung.

Nach Bestimmung des Versatzes wird nun aus einem Bausatz mit mehreren als optischer Exzenter ausgebildeten Koppelelementen ein Koppelelement ausgewählt, bei dem der Versatz zwischen den beiden optischen Achsen 420, 430 gleich dem ermittelten Versatz zwischen der optischen Achse 10 der optischen Einheit und der Symmetrieachse 20 der Referenzgeometrie ist, so dass sich der vorhandene Versatz kompensieren lässt. Es wird also ein Koppelelement 4 ausgewählt, bei dem der Abstand zwischen den beiden optischen Achsen 420, 430 gerade gleich dem Betrag des Versatzvektors ist.

Das Koppelelement 4 wird in Bezug auf die Referenzgeometrie 2 an dem optischen Modul befestigt und in eine Position gedreht, in der auch die Richtung des Versatzes übereinstimmt. Beim Drehen des Koppelelementes 4 wird die optische Achse 420 in Übereinstimmung mit der optischen Achse 10 des optischen Chips 1 gebracht. Es wird darauf hingewiesen, dass eine Drehbewegung des Koppelelementes 4 nur den dem optischen Chip 1 zugewandten Einkoppelbereich 412 bzw. die zugehörige Achse 420 verschiebt. Der Bereich 411 des Lichtwellenleiters, der an der einem optischen Stecker zugewandten Seite 43 des Koppelelementes 4 angeordnet ist, dreht sich bei einer Drehbewegung des Koppelelementes nur um seine eigene Achse, da die optische Achse 430 an der zweiten Seite 43 des Koppelelementes 4 mit der Mittelachse 410 übereinstimmt. Die mit einem optischen Stecker zu koppelnde Seite 43 des Koppelelementes 4 ist somit invariant gegenüber Drehungen des Koppelelementes, so dass die optische Achse eines anzukoppelnden optischen Steckers dauerhaft und exakt auf die optische Achse 430 bzw. die Mittenachse 410 des Koppelelementes ausgerichtet werden kann.

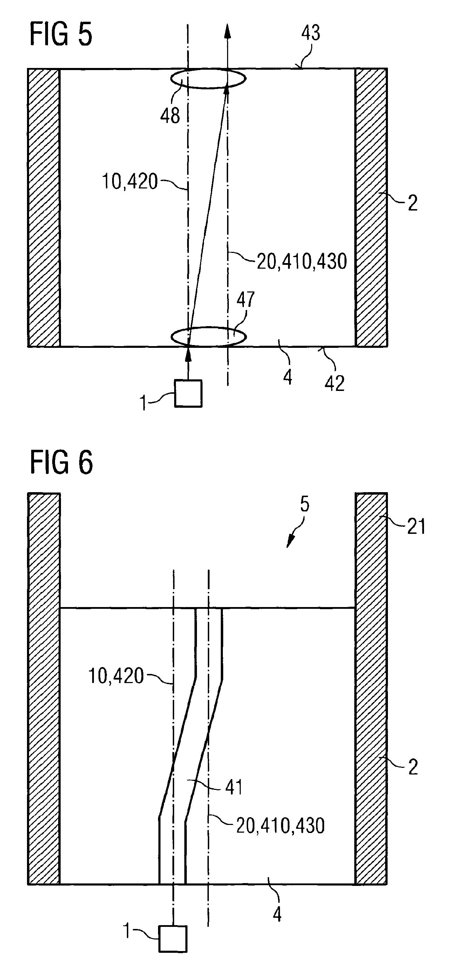

Die Figur 5 zeigt ein alternatives Ausführungsbeispiel, bei dem die Lichtführung innerhalb des Koppelelementes 4 nicht mittels einer Lichtleitfaser, sondern mittels zweier Linsen 47, 48 realisiert wird. Die eine Linse ist dabei im Bereich der ersten Seite 42 des Koppelelementes 4 und die andere Linse 48 im Bereich der zweiten Seite 43 des Koppelelementes 4 ausgebildet. Die Linsen können in einer ersten Ausgestaltung durch das Material des Koppelelementes gebildet sein. In einer zweiten Ausgestaltung sind sie als gesonderte Teile ausgebildet und in das Material des Koppelelementes eingesetzt oder aufgesetzt. In einer dritten Ausgestaltung sind sie außerhalb des eigentlichen Koppelelementes angeordnet. Bevorzugt sind sie aber in das Koppelelement integriert. Es kann sich beispielsweise um konvexe Linsen oder Fresnel-Linsen handeln. Der Abstand zwischen den beiden Linsen 47, 48 auf den beiden Seiten 42, 43 des Koppelelementes 4 ist beispielsweise gleich der zweifachen Brennweite der Linsen. Die Lichteinkopplung in die Linsen 47, 48 erfolgt versetzt zur jeweiligen Linsenachse.

Die spezielle Lichtführung wird bei dieser Ausgestaltung somit durch eine abbildende Optik erzeugt. Durch einen Versatz des optischen Bauelementes 1 zur unteren Linse 47 entsteht ein "Schielwinkel", der durch die zweite Linse 48 wieder ausgeglichen wird. Ansonsten ergeben sich gegenüber der Ausgestaltung der Figur 4 keine Änderungen.

Es wird darauf hingewiesen, dass bei der Ausgestaltung der Figur 5 der an der ersten Seite 42 des Koppelelementes vorgesehene Ein-/Auskoppelbereich mit der entsprechenden optischen Achse 420 durch einen gegenüber der Linsenachse versetzten Teilbereich der Linse 47 bereitgestellt ist. Gleiches gilt für den an der zweiten Seite 43 des Koppelelementes 4 vorgesehenen Ein-/Auskoppelbereich mit der optischen Achse 430. Die Ein-/Auskoppelbereiche und optischen Achsen 420, 430 definieren sich über die funktionale Beziehung, dass entlang der einen optischen Achse eingekoppeltes Licht entlang der anderen optischen Achse ausgekoppelt wird, wobei dies für beide Richtungen gilt. Die Linsen sind so ausgebildet und angeordnet, dass diese Funktionalität erfüllt wird.

Figuren 6 bis 8 zeigen verschiedene Möglichkeiten, eine Lichtleitfaser oder einen optischen Stecker zu befestigen. Bei der Ausgestaltung der Figur 6 weist die durch einen zylindrischen Stutzen ausgebildete Referenzgeometrie 2 eine Länge derart auf, dass nach Einstecken des Koppelelementes 4 in den Stutzen 2 ein überstehender Bereich 21 eine Aussparung 5 bereitstellt, die der Aufnahme eines optischen Steckers dient. Eine Lichtleitfaser ist dabei mittig in einem solchen optischen Stecker angeordnet. Bei der Ausgestaltung der Figur 6 erfolgt eine Ankopplung einer Lichtleitfaser bzw. eines optischen Steckers somit mittels der Referenzgeometrie 2.

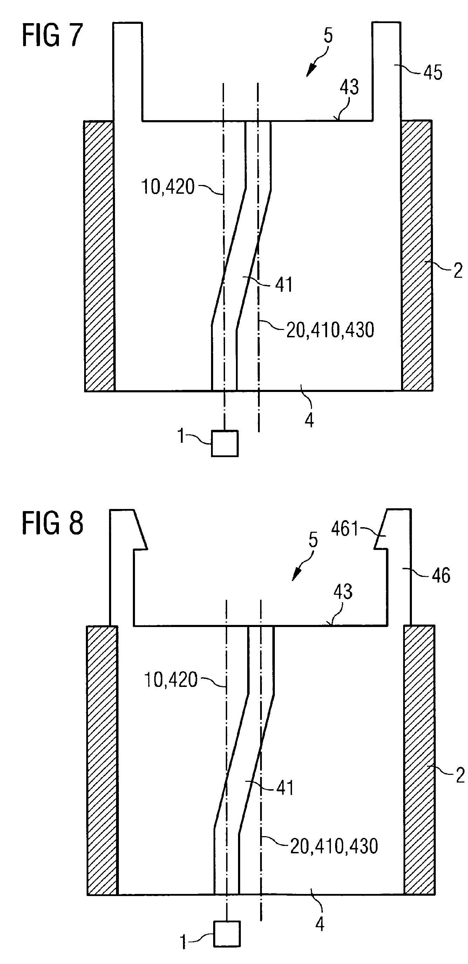

Bei der Ausgestaltung der Figur 7 bildet dagegen das Koppelelement an seinem der optischen Einheit 1 abgewandten Seite 43 einen zylindrischen Stutzen 45 aus, durch den ein Aufnahmebereich 5 zur Ankopplung eines optischen Steckers bereitgestellt wird. Der Stutzen 45 kann dabei je nach Größe einen optischen Stecker oder auch nur einen sogenannten "Faserstummel" bzw. "fiberstub" aufnehmen.

Bei der Ausgestaltung gemäß der Figur 8 bildet das der optischen Einheit 1 abgewandte Ende 43 des Koppelelementes 4 ein Rastteil 46 mit Raststrukturen 461 aus, das eine Aufnahmeöffnung 5 zur Ankopplung eines optischen Steckers bereitstellt. Durch Einführen eines optischen Steckers in die Öffnung 5 und eine entsprechende Verrastung kann ein optischer Stecker mit einer mittig angeordneten Lichtleitfaser mittels einer Schnappverbindung mit dem Koppelelement 4 verbunden werden. Bei den Ausgestaltungen der Figuren 7 und 8 wird eine Lichtleitfaser oder ein optischer Stecker somit an das Koppelelement 4 angekoppelt.

Das Koppelelement 4 kann beispielsweise aus Metall, Keramik oder Kunststoff bestehen.

Es wird darauf hingewiesen, dass das Koppelelement 4 wie dargestellt bevorzugt über die Referenzgeometrie 2 am optischen Modul befestigt wird. Hierzu wird das Koppelelement an der Referenzgeometrie durch Kleben, Schweißen oder eine andere dauerhafte Verbindungsart befestigt und fixiert. Die Referenzgeometrie dient also der Befestigung des Koppelelements. Dies ist zwar vorteilhafterweise, jedoch nicht notwendigerweise der Fall. So kann die Referenzgeometrie auch allein zur Bestimmung eines Versatzes des optischen Chips 1 verwendet werden und eine Befestigung des Koppelelements 4 an dem optischen Modul auch über andere Befestigungsstrukturen erfolgen.

## Patentansprüche

1. Verfahren zur optischen Kopplung eines Lichtwellenleiters mit einer optischen Einheit (1), die in oder an einem optischen Modul angeordnet ist, wobei
- die optische Einheit (1) eine (erste) optische Achse (10) aufweist, entlang derer Licht von der optischen Einheit (1) ausgesandt oder empfangen wird, und
- das optische Modul eine Referenzgeometrie (2) aufweist, die genau eine Symmetrieachse (20) definiert,
**gekennzeichnet durch** die Schritte:
- Feststellen von Betrag und Richtung eines Versatzes zwischen der ersten optischen Achse (10) der optischen Einheit (1) und der Symmetrieachse (20) der Referenzgeometrie (2),
- Bereitstellen eines Koppelelementes (4) mit einer ersten, der optischen Einheit zugewandten Seite und einer zweiten, mit einem Lichtwellenleiter zu koppelnden Seite, wobei
o das Koppelelement eine Mittelachse (410) aufweist,
o die erste Seite (42) des Koppelelements (4) einen Ein-/Auskoppelbereich mit einer (zweiten) optische Achse (420) aufweist,
o die zweite Seite (43) des Koppelelements (4) einen Ein-/Auskoppelbereich mit einer (dritten) optischen Achse (430) aufweist, die parallel zur zweiten optischen Achse (420) verläuft und die mit der Mittelachse (410) zusammenfällt,
o entlang der zweiten optischen Achse (420) eingekoppeltes Licht im Koppelelement eine Lichtführung derart erfährt, dass es entlang der dritten optischen Achse (430) ausgekoppelt wird, und umgekehrt,
- wobei ein solches Koppelelement (4) aus einer Mehrzahl von Koppelelementen ausgewählt wird, bei dem der Betrag des Versatzes zwischen der zweiten und der dritten optischen Achse (420, 430) im wesentlichen gleich dem Betrag des Versatzes zwischen der ersten optischen Achse (10) der optischen Einheit (1) und der Symmetrieachse (20) der Referenzgeometrie (2) ist,
- passives Anordnen des Koppelelementes (4) in Bezug auf das optische Modul derart, dass die Mittelachse (410) des Koppelelements (4) mit der Symmetrieachse (20) des optischen Moduls zusammenfällt,
- Drehen des Koppelelementes (4) in Bezug auf das optische Modul, bis die erste optische Achse (10) der optischen Einheit (1) und die zweite optische Achse (420) des Koppelelements (4) zusammenfallen.

2. Verfahren nach Anspruch 1, **dadurch**
**gekennzeichnet, dass** entlang der zweiten optischen Achse (420) oder entlang der dritten optischen Achse (430) in das Koppelelement (4) eingekoppeltes Licht in einen internen Lichtwellenleiter (41) eingekoppelt wird, dessen eines Ende (412) auf der zweiten optischen Achse (420) liegt und dessen anderes Ende (411) auf der dritten optischen Achse (430) liegt, wobei der Lichtwellenleiter (41) zwischen den beiden Enden (411, 412) einen gebogenen Verlauf besitzt.

3. Verfahren nach Anspruch 1, **dadurch**
**gekennzeichnet, dass** in das Koppelelement eingekoppeltes Licht mittels einer abbildenden Optik (47, 48) zwischen der ersten Seite (42) und der zweiten Seite (43) des Koppelelements (4) derart übertragen wird, dass entlang der zweiten optischen Achse (420) eingekoppeltes Licht entlang der dritten optischen Achse (430) ausgekoppelt wird und umgekehrt.

4. Verfahren nach mindestens einem der vorangehenden Ansprüche, **dadurch gekennzeichnet, dass** das Koppelelement (4) mittels der Referenzgeometrie (2) an dem optischen Modul befestigt wird.

5. Verfahren nach Anspruch 4, **dadurch**
**gekennzeichnet, dass** die Referenzgeometrie (2) und das Koppelelement (4) unter Verwendung von Führungsstrukturen miteinander verbunden werden, die durch die Referenzgeometrie und/oder das Koppelelement bereitgestellt werden.

6. Verfahren nach mindestens einem der vorangehenden Ansprüche, **dadurch gekennzeichnet, dass** der Versatz zwischen der optischen Achse (10) des optischen Elementes (1) und der Symmetrieachse (20) der Referenzgeometrie (2) über ein Bilderkennungsverfahren erfasst wird.

7. Optisches Modul, das eine optische Einheit (1) und eine Referenzgeometrie (2) aufweist, wobei
- die optische Einheit (1) eine erste optische Achse (10) aufweist, entlang derer Licht von der optischen Einheit (1) ausgesandt oder empfangen wird, und
- die Referenzgeometrie (2) genau eine Symmetrieachse (20) definiert,
**dadurch gekennzeichnet, dass**
- die erste optische Achse (10) der optischen Einheit (1) und die Symmetrieachse (20) der Referenzgeometrie (2) hinsichtlich Betrag und Richtung einen Versatz zueinander aufweisen,
- ein Koppelelement (4) mit einer ersten, der optischen Einheit zugewandten Seite (42) und einer zweiten Seite (43) vorgesehen ist, die der Ankopplung eines mit der optischen Einheit (1) optisch zu koppelnden Lichtwellenleiters dient, wobei
o das Koppelelement (4) eine Mittelachse (410) aufweist,
o die erste Seite (42) des Koppelelements (4) einen Ein-/Auskoppelbereich mit einer (zweiten) optische Achse (420) aufweist,
o die zweite Seite (43) des Koppelelements (4) einen Ein-/Auskoppelbereich mit einer (dritten) optischen Achse (430) aufweist, die parallel zur zweiten optischen Achse (420) verläuft und die mit der Mittelachse (410) zusammenfällt,
o entlang der zweiten optischen Achse (420) eingekoppeltes Licht im Koppelelement eine Lichtführung derart erfährt, dass es entlang der dritten optischen Achse (430) ausgekoppelt wird, und umgekehrt, und
o die zweite optische Achse (420) und die dritte optische Achse (430) einen Versatz zueinander aufweisen, dessen Betrag im wesentlichen gleich dem Betrag des Versatzes zwischen der ersten optischen Achse (10) der optischen Einheit (1) und der Symmetrieachse (20) der Referenzgeometrie (2) ist,
- das Koppelelement (4) derart in Bezug auf das optische Modul angeordnet ist, dass die Mittelachse (410) des Koppelelements (4) mit der Symmetrieachse (20) des optischen Moduls zusammenfällt, und
- die erste optische Achse (10) der optischen Einheit (10) mit der zweiten optischen Achse (420) des Koppelelements (4) zusammenfällt.

8. Modul nach Anspruch 7, **dadurch**
**gekennzeichnet, dass** das Koppelelement einen internen Lichtwellenleiter (41) aufweist oder ausbildet, dessen eines Ende (412) auf der zweiten optischen Achse (420) liegt und dessen anderes Ende (411) auf der dritten optischen Achse (430) liegt, wobei der Lichtwellenleiter (41) zwischen den beiden Enden (411, 412) einen gebogenen Verlauf besitzt.

9. Modul nach Anspruch 8, **dadurch**
**gekennzeichnet, dass** der Lichtwellenleiter (41) durch eine Glasfaser gebildet ist.

10. Modul nach Anspruch 8, **dadurch**
**gekennzeichnet, dass** das Koppelelement (4) ein Kunststoffteil oder Glasteil ist, in dem ein Bereich mit unterschiedlichem Brechungsindex den Lichtwellenleiter (41) realisiert.

11. Modul nach Anspruch 7, **dadurch**
**gekennzeichnet, dass** eine abbildende Optik (47, 48) vorgesehen ist, durch die entlang der zweiten optischen Achse (420) eingekoppeltes Licht im Koppelelement eine Lichtführung derart erfährt, dass es entlang der dritten optischen Achse (430) ausgekoppelt wird, und umgekehrt.

12. Modul nach Anspruch 11, **dadurch**
**gekennzeichnet, dass** die abbildende Optik mindestens zwei Linsen (47, 48) aufweist, wobei die eine Linse (47) im Bereich der ersten Seite (42) des Koppelelements und die andere Linse (48) im Bereich der zweiten Seite (43) des Koppelelements angeordnet ist.

13. Modul nach mindestens einem der Ansprüche 7 bis 12, **dadurch gekennzeichnet, dass** die Außenkontur des Koppelelements (4) zylindrisch ist.

14. Modul nach mindestens einem der Ansprüche 7 bis 13, **dadurch gekennzeichnet, dass** der auf die optische Einheit (1) auszurichtende Lichtwellenleiter mit seiner Stirnseite an der zweiten Seite (43) des Koppelelements anliegt, wobei die Mittelachse (410) des Koppelelements (4) gleich der optischen Achse des Lichtwellenleiters ist.

15. Modul nach mindestens einem der Ansprüche 7 bis 14, **dadurch gekennzeichnet, dass** das Koppelelement (4) mittels der Referenzgeometrie (2) an dem optischen Modul befestigt ist.

16. Modul nach mindestens einem Ansprüche 7 bis 15, **dadurch gekennzeichnet, dass** das Koppelelement (4) an der der optischen Einheit abgewandten Seite Raststrukturen (46) zur Ankopplung eines optischen Steckers mit einem Lichtwellenleiter aufweist.

17. Modul nach mindestens einem der Ansprüche 7 bis 15, **dadurch gekennzeichnet, dass** die Referenzgeometrie (2) im Querschnitt kreisförmig oder als N-Eck ausgebildet ist.

18. Koppelelement für ein optisches Modul gemäß Anspruch 7, das aufweist:
o eine erste Seite (42), die der Kopplung mit einer optischen Einheit dient,
o eine zweite Seite (43), die der Kopplung mit einem Lichtwellenleiter dient, wobei
o das Koppelelement (4) eine Mittelachse (410) aufweist,
o die erste Seite (42) des Koppelelements (4) einen Ein-/Auskoppelbereich mit einer optischen Achse (420) aufweist, und
o die zweite Seite (43) des Koppelelements (4) einen Ein-/Auskoppelbereich mit einer optischen Achse (430) aufweist, die parallel zur optischen Achse (420) der ersten Seite verläuft und die mit der Mittelachse (410) zusammenfällt, wobei
o entlang der optischen Achse (420) der ersten Seite eingekoppeltes Licht im Koppelelement eine Lichtführung derart erfährt, dass es entlang der optischen Achse (430) der zweiten Seite ausgekoppelt wird, und umgekehrt.

19. Koppelelement nach Anspruch 18, **dadurch gekennzeichnet, dass** die zweite Seite (43) des Koppelelementes Aufnahmestrukturen (45, 46) zur Ankopplung eines optischen Steckers aufweist.

20. Koppelelement nach Anspruch 18 oder 19, **dadurch gekennzeichnet, dass** das Koppelelement (4) einteilig ausgebildet ist.

21. Bausatz mit einer Mehrzahl von Koppelelementen (4) gemäß Anspruch 18, wobei der Versatz zwischen den beiden optischen Achsen (420, 430) bei den einzelnen Koppelelementen (4) des Bausatzes unterschiedlich groß ist.

## Geänderte Patentansprüche

### Geänderte Patentansprüche gemäss Regel 86(2) EPÜ.

**1.** Verfahren zur optischen Kopplung eines Lichtwellenleiters mit einer optischen Einheit (1), die in oder an einem optischen Modul angeordnet ist, wobei
- die optische Einheit (1) eine erste optische Achse (10) aufweist, entlang derer Licht von der optischen Einheit (1) ausgesandt oder empfangen wird, und
- das optische Modul eine Referenzgeometrie (2) aufweist, die eine Führungsstruktur ausbildet, die genau eine Symmetrieachse (20) definiert,
**gekennzeichnet durch** die Schritte:
- Feststellen von Betrag und Richtung eines Versatzes zwischen der ersten optischen Achse (10) der optischen Einheit (1) und der Symmetrieachse (20) der Referenzgeometrie (2),
- Bereitstellen einer Mehrzahl von Koppelelementen (4), jeweils mit einer ersten, der optischen Einheit zugewandten Seite und einer zweiten, mit einem Lichtwellenleiter zu koppelnden Seite, wobei
o die Koppelelemente jeweils eine Mittelachse (410) aufweisen,
o die erste Seite (42) der Koppelelemente (4) einen Ein-/Auskoppelbereich mit einer zweiten optische Achse (420) aufweist,
o die zweite Seite (43) der Koppelelemente (4) einen Ein-/Auskoppelbereich mit einer dritten optischen Achse (430) aufweist, die parallel zur zweiten optischen Achse (420) verläuft und die mit der Mittelachse (410) zusammenfällt,
o entlang der zweiten optischen Achse (420) eingekoppeltes Licht in den Koppelelementen eine Lichtführung derart erfährt, dass es entlang der dritten optischen Achse (430) ausgekoppelt wird, und umgekehrt,
- wobei ein solches Koppelelement (4) aus der Mehrzahl von Koppelelementen ausgewählt wird, bei dem der Betrag des Versatzes zwischen der zweiten und der dritten optischen Achse (420, 430) im wesentlichen gleich dem Betrag des Versatzes zwischen der ersten optischen Achse (10) der optischen Einheit (1) und der Symmetrieachse (20) der Referenzgeometrie (2) ist,
- passives Anordnen des Koppelelementes (4) in Bezug auf das optische Modul derart, dass die Mittelachse (410) des Koppelelements (4) mit der Symmetrieachse (20) des optischen Moduls zusammenfällt,
- Drehen des Koppelelementes (4) in Bezug auf das optische Modul, bis die erste optische Achse (10) der optischen Einheit (1) und die zweite optische Achse (420) des Koppelelements (4) zusammenfallen.

**2.** Verfahren nach Anspruch 1, **dadurch gekennzeichnet, dass** entlang der zweiten optischen Achse (420) oder entlang der dritten optischen Achse (430) in das Koppelelement (4) eingekoppeltes Licht in einen internen Lichtwellenleiter (41) eingekoppelt wird, dessen eines Ende (412) auf der zweiten optischen Achse (420) liegt und dessen anderes Ende (411) auf der dritten optischen Achse (430) liegt, wobei der Lichtwellenleiter (41) zwischen den beiden Enden (411, 412) einen gebogenen Verlauf besitzt.

**3.** Verfahren nach Anspruch 1, **dadurch gekennzeichnet, dass** in das Koppelelement eingekoppeltes Licht mittels einer abbildenden Optik (47, 48) zwischen der ersten Seite (42) und der zweiten Seite (43) des Koppelelements (4) derart übertragen wird, dass entlang der zweiten optischen Achse (420) eingekoppeltes Licht entlang der dritten optischen Achse (430) ausgekoppelt wird und umgekehrt.

**4.** Verfahren nach mindestens einem der vorangehenden Ansprüche, **dadurch gekennzeichnet, dass** das Koppelelement (4) mittels der Referenzgeometrie (2) an dem optischen Modul befestigt wird.

**5.** Verfahren nach Anspruch 4, **dadurch gekennzeichnet, dass** die Referenzgeometrie (2) und das Koppelelement (4) unter Verwendung von Führungsstrukturen miteinander verbunden werden, , wobei die Koppelelemente jeweils eine mit der Führungsstruktur der Referenzgeometrie (2) korrespondierende Strukur aufweisen.

**6.** Verfahren nach mindestens einem der vorangehenden Ansprüche, **dadurch gekennzeichnet, dass** der Versatz zwischen der optischen Achse (10) des optischen Elementes (1) und der Symmetrieachse (20) der Referenzgeometrie (2) über ein Bilderkennungsverfahren erfasst wird.

**7.** Koppelelement für ein optisches Modul, das Koppelelement aufweisend:
o eine erste Seite (42), die der Kopplung mit einer optischen Einheit, die eine erste optische Achse aufweist, dient,
o eine zweite Seite (43), die der Kopplung mit einem Lichtwellenleiter dient, wobei
o das Koppelelement (4) eine Mittelachse (410) aufweist,
o die erste Seite (42) des Koppelelements (4) einen Ein-/Auskoppelbereich mit einer zweiten optischen Achse (420) aufweist, und
o die zweite Seite (43) des Koppelelements (4) einen Ein-/Auskoppelbereich mit einer dritten optischen Achse (430) aufweist, die parallel zur optischen Achse (420) der ersten Seite verläuft und die mit der Mittelachse (410) zusammenfällt, wobei
o entlang der optischen Achse (420) der ersten Seite eingekoppeltes Licht im Koppelelement eine Lichtführung derart erfährt, dass es entlang der optischen Achse (430) der zweiten Seite ausgekoppelt wird, und umgekehrt,
**gekennzeichnet durch**
o einen internen Lichtwellenleiter (41), dessen eines Ende (412) auf der zweiten optischen Achse (420) liegt und dessen anderes Ende (411) auf der dritten optischen Achse (430) liegt, wobei der Lichtwellenleiter (41) zwischen den beiden Enden (411, 412) einen gebogenen Verlauf besitzt.

**8.** Koppelelement nach Anspruch 7, **dadurch gekennzeichnet, dass** die zweite Seite (43) des Koppelelementes Aufnahmestrukturen (45, 46) zur Ankopplung eines optischen Steckers aufweist.

**9.** Koppelelement nach Anspruch 7 oder 8, **dadurch gekennzeichnet, dass** das Koppelelement (4) einteilig ausgebildet ist.

**10.** Koppelelement nach mindestens einem der Ansprüche 7 bis 9, **dadurch gekennzeichnet, dass** der Lichtwellenleiter (41) durch eine Glasfaser gebildet ist.

**11.** Koppelelement nach mindestens einem der Ansprüche 7 bis 10, **dadurch gekennzeichnet, dass** das Koppelelement (4) ein Kunststoffteil oder Glasteil ist, in dem ein Bereich mit unterschiedlichem Brechungsindex den Lichtwellenleiter (41) realisiert.

**12.** Koppelelement nach mindestens einem der Ansprüche 7 bis 11, **dadurch gekennzeichnet, dass** die Außenkontur des Koppelelements (4) zylindrisch ist.

**13.** Optisches Modul, das eine optische Einheit (1) und eine Referenzgeometrie (2) aufweist, wobei
- die optische Einheit (1) eine erste optische Achse (10) aufweist, entlang derer Licht von der optischen Einheit (1) ausgesandt oder empfangen wird, und
- die Referenzgeometrie (2) eine Führungsstruktur ausbildet, die genau eine Symmetrieachse (20) definiert, wobei
- die erste optische Achse (10) der optischen Einheit (1) und die Symmetrieachse (20) der Referenzgeometrie (2) hinsichtlich Betrag und Richtung einen Versatz zueinander aufweisen,
**dadurch gekennzeichnet, dass**
- das optische Modul des weiteren ein Koppelelement (4) gemäß Anspruch 7 aufweist, das der Ankopplung eines mit der optischen Einheit (1) optisch zu koppelnden Lichtwellenleiters dient, wobei
- das Koppelelement (4) derart in Bezug auf das optische Modul angeordnet ist, dass die Mittelachse (410) des Koppelelements (4) mit der Symmetrieachse (20) des optischen Moduls zusammenfällt, und
- die erste optische Achse (10) der optischen Einheit (10) mit der zweiten optischen Achse (420) des Koppelelements (4) zusammenfällt.

**14.** Modul nach Anspruch 13, **dadurch gekennzeichnet, dass** der auf die optische Einheit (1) auszurichtende Lichtwellenleiter mit seiner Stirnseite an der zweiten Seite (43) des Koppelelements anliegt, wobei die Mittelachse (410) des Koppelelements (4) gleich der optischen Achse des Lichtwellenleiters ist.

**15.** Modul nach mindestens einem der Ansprüche 13 bis 14, **dadurch gekennzeichnet, dass** das Koppelelement (4) mittels der Referenzgeometrie (2) an dem optischen Modul befestigt ist.

**16.** Modul nach mindestens einem Ansprüche 13 bis 15, **dadurch gekennzeichnet, dass** das Koppelelement (4) an der der optischen Einheit abgewandten Seite Raststrukturen (46) zur Ankopplung eines optischen Steckers mit einem Lichtwellenleiter aufweist.

**17.** Modul nach mindestens einem der Ansprüche 13 bis 16, **dadurch gekennzeichnet, dass** die Referenzgeometrie (2) im Querschnitt kreisförmig oder als N-Eck ausgebildet ist.

**18.** Bausatz mit einer Mehrzahl von Koppelelementen (4) gemäß Anspruch 7, wobei der Versatz zwischen den beiden optischen Achsen (420, 430) bei den einzelnen Koppelelementen (4) des Bausatzes unterschiedlich groß ist.
